# FASCICULE DE BREVET EUROPEEN

(11) **EP 1 526 165 B1**
(45) Date de publication et mention de la délivrance du brevet: **14.04.2010**
(21) Numéro de dépôt: 04292476.1
(22) Date de dépôt: 18.10.2004
(51) Int. Cl.: C10G 2/00

(54) **Production de carburants liquides par un enchaînement de procédés de traitement d'une charge solide hydrocarbonée**
Verfahren zur Erzeugung von flüssigen Kraftstoffen aus festen Kohlenwasserstoff-Einsatzstoffen
Process for producing liquid fuels from a solid hydrocarbonaceous feedstock

(30) Priorité: 24.10.2003 FR 0312551
(43) Date de publication de la demande: 27.04.2005
(73) Titulaire: Institut Français du Pétrole, 92852 Rueil Malmaison Cedex (FR); COMMISSARIAT A L'ENERGIE ATOMIQUE, 75752 Paris Cédex 15 (FR)
(72) Inventeur: Bayle, Jérôme, 44700 Orvault (FR); Boissonnet, Guillaume, 38100 Grenoble (FR); Marty, Eric, 69495 Pierre Benite (FR); Seiller, Jean-Marie, 38180 Seyssins (FR)

(56) Documents cités:
- WO-A-01/66496
- US-A1- 2003 192 235

## Description

### Domaine de l'invention :

La présente invention concerne un procédé pour la production de carburants liquides à partir d'une charge solide comprenant de la matière organique, typiquement la biomasse. Plus particulièrement, l'invention se rapporte à un procédé comprenant une étape de gazéification de la charge solide, une étape de purification du gaz de synthèse et une étape de transformation du gaz de synthèse en carburants liquides.

### Art antérieur :

Un grand nombre de brevets décrivent l'utilisation de gaz de synthèse pour produire des biocarburants par une synthèse Fischer-Tropsch à laquelle est souvent associé un hydrocraquage. La synthèse Fischer-Tropsch produit des coupes gasoil, kérosène, naphta et un gaz de tête en quantité plus ou moins importante en fonction du jeu de conditions opératoires choisi dans les zones réactionnelles du Fischer-Tropsch et de l'hydrocraquage, ainsi que des conditions opératoires du train de distillation en aval.

Le brevet US 5,494,653 propose une méthode de traitement d'un gaz de synthèse par mise en contact avec un catalyseur à base d'alumine et un mélange gazeux comprenant de la vapeur d'eau et des hydrocarbures, à une température comprise entre 530°C et 980°C, dans laquelle les hydrocarbures sont craqués pour former de l'hydrogène, du monoxyde de carbone et/ou du dioxyde de carbone et dans laquelle la teneur en hydrogène augmente en même temps que la teneur en monoxyde de carbone diminue.

Un objet de la présente invention est de maximiser la conversion du carbone de la charge en carburants liquides lourds de type gasoil et kérosène. On cherche ainsi à minimiser ou à valoriser le naphta produit par ce type de procédé, celui ci ne présentant qu'un intérêt économique limité. Différentes voies de valorisation peuvent être envisagées pour le naphta produit.

La demande de brevet WO 02/55633 envisage une méthode dans laquelle les oléfines légères contenues dans le naphta subissent une dimérisation pour être converties en coupes plus lourdes, la proportion d'oléfines contenues dans le naphta pouvant éventuellement être augmentée par une étape de déshydrogénation de la coupe naphta.
La demande de brevet WO 01/64610 envisage, quant à lui, l'utilisation de la coupe naphta pour produire des alkyl benzènes qui ont d'excellentes propriétés lubrifiantes. Le naphta est converti en aromatiques par réformage catalytique. La coupe C₁₈-C₂₆ produite par le Fischer-Tropsch est déshydrogénée puis réagit avec les aromatiques dans une unité d'alkylation.
La demande de brevet WO 01/60773 décrit un procédé pour convertir des hydrocarbures légers en hydrocarbures plus lourds mettant en oeuvre des réactions de type Fischer-Tropsch à partir d'une charge de gaz naturel. Dans ce procédé, le gaz naturel est converti avec de la vapeur d'eau dans une étape de pré-reformage. Ce brevet décrit également la possibilité de recycler des hydrocarbures légers et éventuellement des effluents gazeux de la synthèse Fischer-Tropsch dans la zone de pré-reformage en amont de la zone de ladite synthèse Fischer-Tropsch. Du fait de la nature de la charge, en l'occurrence le gaz naturel, le rapport molaire de l'hydrogène sur le monoxyde de carbone, H₂/CO, en sortie de la zone initiale de pré-reformage est généralement supérieur à 2 et doit être ajusté en minimisant l'injection de vapeur d'eau.
Dans le cas de l'invention, la charge hydrocarbonée est une charge solide telle que la biomasse. Ce type de charge est généralement, par rapport au gaz naturel, plus pauvre en hydrogène. De ce fait, le rapport molaire H₂/CO en sortie de l'étape de gazéification a tendance à être inférieure à 2, quelque soit la quantité de vapeur d'eau injectée.
Le document WO 01/66496 décrit un procédé de production d'acide acétique à partir d'une matière première cellulosique comprenant une suite d'étape dont une première étape de craquage à la vapeur de la matière cellulosique qui est réalisée à une température comprise entre 650°C et 900°C.
Le document US 2003/0192235 décrit une méthode en vue de produire une charge pour la gazéification du charbon, ladite méthode comprenant les étapes suivantes:
la mise en contact du charbon avec de la cire à une température permettant d'obtenir une cire imprégnée de charbon et, l'introduction de la cire imprégnée dans l'unité de gazéification du charbon.

### Description détaillée de l'invention :

Un objet de la présente invention est de maximiser la conversion du carbone de la charge en carburants liquides lourds de type gasoil et kérosène tout en limitant la diminution du rapport molaire H₂/CO dans l'étape de gazéification. Il est généralement nécessaire de compenser cette diminution du rapport molaire H₂/CO par un ajustement qui est réalisé par une réaction de conversion du monoxyde de carbone (shift-reaction selon la terminologie anglosaxonne), qui consiste à oxyder le monoxyde de carbone par de l'eau afin de produire de l'hydrogène et du dioxyde de carbone. Cet ajustement induit généralement une perte significative en débit massique de CO qui se répercute alors directement sur la production de biocarburants car celle-ci est directement proportionnelle au débit massique de monoxyde de carbone en entrée de l'étape de synthèse de type Fischer-Tropsch.

Il a été trouvé un procédé pour la production de carburants liquides lourds de type gasoil et kérozène à partir d'une charge solide contenant de la matière organique dans lequel :
a) on soumet la charge solide à une étape de gazéification de manière à convertir ladite charge en gaz de synthèse comportant du monoxyde de carbone et de l'hydrogène,
b) on soumet le gaz de synthèse obtenu à l'étape a) à un traitement de purification comportant un ajustement pour augmenter le rapport molaire de l'hydrogène sur le monoxyde de carbone, H2/CO, jusqu'à une valeur comprise entre 1,8 et 2,2,
c) on soumet le gaz de synthèse purifié obtenu à l'étape b) à une étape de conversion comportant la mise en oeuvre d'une synthèse de type Fischer-Tropsch de manière à convertir ledit gaz de synthèse en un effluent liquide et un effluent gazeux au moins en partie recyclé à l'étape a) de gazéification
d) on fractionne l'effluent liquide obtenu à l'étape c) de manière à obtenir les quatre coupes suivantes : une coupe gazeuse au moins en partie recyclée à l'étape a) de gazéification, une coupe naphta, une coupe kérosène et une coupe gasoil, et
e) on recycle au moins une portion de la coupe naphta à l'étape a) de gazéification.

Un autre objet de l'invention est de maximiser la conversion des goudrons et des hydrocarbures légers lors de l'étape de gazéification. En effet, une charge de type biomasse peut engendrer, lors de l'étape de gazéification, la formation d'une quantité substantielle de méthane qu'il convient de convertir.

Ainsi, il a été trouvé que, en dépit du besoin de limiter la diminution du rapport molaire H₂/CO lors de l'étape a) de gazéification, des conditions sévères peuvent être avantageusement mises en oeuvre lors de l'étape de gazéification.

Ainsi, l'étape a) de gazéification est, de préférence, mise en oeuvre dans au moins une zone dans laquelle la température est maintenue au-dessus de 1000°C.

De manière plus préférée, lors de l'étape a) de gazéification :
- on met en contact la charge avec un agent oxydant dans des conditions de pyrolyse pour produire un premier effluent gazeux dans une zone primaire dans laquelle la charge solide est maintenue à l'état fluidisé et la teneur en gaz oxydant est maintenue au-dessous de 10 % molaire, de préférence au-dessous de 5 % molaire, et
- on soumet l'effluent gazeux ainsi produit à un traitement de finition dans une zone secondaire dans laquelle la température est maintenue entre 1000 et 1500°C.

L'apport d'énergie dans la zone primaire peut être, de préférence, réalisé par un solide caloporteur porté à une température généralement comprise entre 600 et 1000 °C. Ce solide caloporteur peut correspondre, de manière non exhaustive, à un minerai naturel ou un mélange de minerais naturels, éventuellement mis en forme, de type dolomie, mica, olivine, bentonite, trona, borax, ou autres dérivés, ou à un support de type inerte (sable, silice) ou actif (alumine, dolomie, olivine, charbon) pouvant contenir des éléments métalliques (Ni, Cu, Fe, Zn ou autres), ou par des composés contenant des sels alcalins ou alcalino-terreux.

Le solide caloporteur peut, de préférence, comprendre une silice alumine présentant un caractère acide, telle que celles utilisées dans les procédés de craquage en lit fluidisé (FCC) de conversion des résidus lourds issus de la distillation du pétrole.

La charge peut être introduite dans la zone primaire par n'importe quel moyen connu de l'homme du métier. Par exemple, elle peut être introduite au moyen d'un gaz de convoyage pouvant être un gaz inerte de type azote, un agent oxydant de type vapeur d'eau ou dioxyde de carbone ou un gaz appauvri en oxygène de type fumées de combustion. La plupart des procédés de gazéification utilisent un gaz inerte comme vecteur de la charge solide et il est donc nécessaire de purger une fraction importante des effluents gazeux de la synthèse Fischer-Tropsch, cette fraction étant souvent supérieure ou égale à 10%, pour éviter l'accumulation de gaz inerte dans le circuit.

Selon un autre objet de l'invention, il est possible d'optimiser la fraction de purge des effluents gazeux de la synthèse Fischer-Tropsch. On peut chercher, par exemple, à limiter la fraction de purge à des valeurs inférieures à 5%.

Ainsi, la charge solide peut, de préférence, être injectée au moyen d'un fluide qui ne contient pas d'azote, par exemple du dioxyde de carbone ou de la vapeur d'eau surchauffée.

Dans l'étape b) de l'invention, on soumet le gaz de synthèse obtenu à l'étape a) à un traitement de purification. Ce traitement de purification de l'étape b) peut comprendre, en outre, au moins l'un des traitements choisis parmi une réduction de la teneur en eau, un réduction de la teneur en poussière, une extraction du dioxyde de carbone et une compression du gaz de synthèse.

Dans l'étape c) de l'invention, on soumet le gaz de synthèse purifié obtenu à l'étape b) à une étape de conversion comportant la mise en oeuvre d'une synthèse de type Fischer-Tropsch.

Cette étape c) peut, de préférence, comporter en outre une étape de filtration des cires produites par ladite synthèse de type Fischer-Tropsch, une étape de fractionnement de manière à récupérer une coupe de composés hydrocarbonés ayant au moins dix neuf atomes de carbones (coupe C₁₉⁺) et une étape d'hydrocraquage desdits composés.

On recycle au moins une portion de l'effluent gazeux obtenu à l'étape c) et de la fraction gazeuse obtenue à l'étape d) dans l'étape a) de gazéification.

On peut également purger une portion de l'effluent gazeux obtenu à l'étape c) et de la fraction gazeuse obtenue à l'étape d).

Dans l'étape e) de l'invention, on recycle au moins une portion de la coupe naphta dans l'étape a) de gazéification.

Selon un mode de réalisation de l'invention, on recycle au moins une portion de la coupe naphta dans la zone primaire de l'étape a).

Selon un autre mode de réalisation de l'invention, on recycle au moins une portion de la coupe naphta dans la zone secondaire de l'étape a).

L'installation pour la production de carburants liquides à partir d'une charge solide contenant de la matière organique, comporte :
- des moyens de gazéification de la charge solide en gaz de synthèse,
- des moyens de purification du gaz de synthèse, lesdits moyens de purification comportant un moyen d'ajustement du rapport molaire de l'hydrogène sur le monoxyde de carbone, H2/CO, dudit gaz de synthèse,
- des moyens de conversion du gaz de synthèse purifié en un effluent liquide, lesdits moyens de conversion comportant au moins un réacteur de synthèse Fischer-Tropsch,
- des moyens de fractionnement de l'effluent liquide permettant d'obtenir un carburant liquide et une coupe naphta, et
- des moyens de recyclage du naphta vers les moyens de gazéification.

De manière plus détaillée, l'installation peut comporter :
- des moyens d'alimentation de la charge solide,
- des moyens de gazéification reliés aux moyens d'alimentation et munis d'un conduit d'évacuation d'un gaz de synthèse,
- des moyens de purification reliés au conduit d'évacuation du gaz de synthèse et munis d'un conduit d'évacuation d'un gaz de synthèse purifié, lesdits moyens de purification comportant un moyen d'ajustement du rapport molaire de l'hydrogène sur le monoxyde de carbone, H2/CO, dudit gaz de synthèse,
- les moyens de conversion reliés au conduit d'évacuation du gaz de synthèse purifié et munis d'un conduit d'évacuation d'un effluent liquide, lesdits moyens de conversion comportant au moins un réacteur de synthèse Fischer-Tropsch,
- des moyens de fractionnement de l'effluent liquide reliés au conduit d'évacuation de l'effluent liquide et munis d'au moins un conduit d'évacuation de carburant liquide et d'un conduit d'évacuation d'une coupe naphta, et
- des moyens de recyclage disposés entre le conduit d'évacuation du naphta et les moyens de gazéification.

Ainsi le procédé selon l'invention propose une solution originale et avantageuse permettant une conversion importante d'une charge solide comprenant de la matière organique à granulométrie typiquement comprise entre 0,1 et 100 mm (millimètre) en coupes lourdes de type Gasoil + Kérosène.

Le procédé de l'invention permet, en particulier,
- une conversion importante du carbone de la charge initiale en gaz de synthèse,
- une production maximale de carburants liquides de type gasoil et kérosène, et
- une flexibilité opératoire importante permettant de jouer sur les différents débits de recycle et l'éventuel combustible d'appoint en zone secondaire de gazéification afin de pouvoir ajuster au mieux le rapport H2/CO du gaz de synthèse.

Un avantage de l'invention est donc de maximiser la conversion du carbone de la charge en carburants liquides lourds de type gasoil et kérosène. Elle permet également de minimiser ou de valoriser le naphta produit par ce type de procédé.

Un autre avantage de l'invention est de limiter les ajustements coûteux pour augmenter le rapport molaire H₂/CO, lors de l'étape de purification du gaz de synthèse.

Un autre avantage de l'invention est de maximiser la conversion des goudrons et des hydrocarbures légers dans l'étape de gazéification tout en limitant la diminution du rapport molaire H₂/CO induite par l'étage haute température secondaire.

Un autre avantage est la possibilité de réduire la fraction de purge des effluents gazeux de la synthèse Fischer-Tropsch.

### Description des figures :

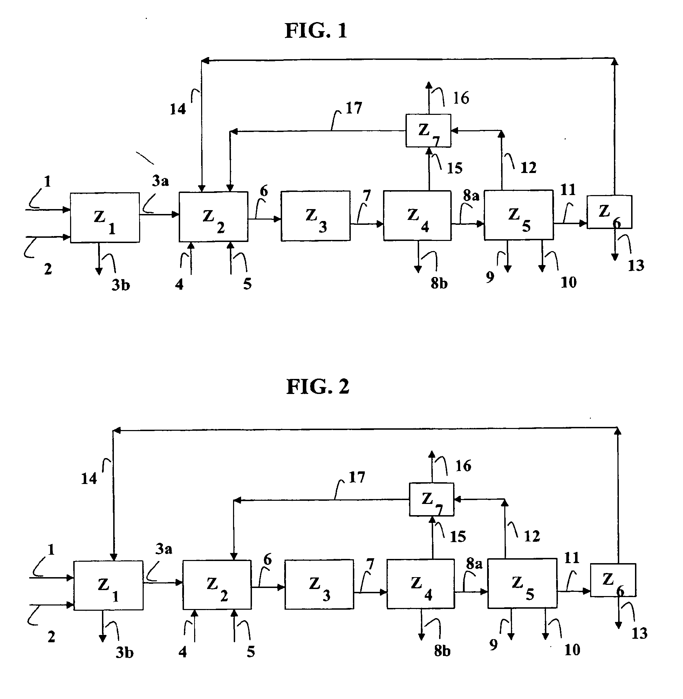

D'autres avantages, détails et caractéristiques de l'invention apparaîtront plus clairement dans la description des deux modes de réalisation illustrés dans les figures 1 et 2. Ces modes de réalisation sont donnés, à titre d'exemple, et ne présentent aucun caractère limitatif. Cette illustration du procédé de l'invention ne comporte pas l'ensemble des composantes nécessaires à sa mise en oeuvre. Seules les éléments nécessaires à la compréhension de l'invention y sont représentés, l'homme du métier étant capable de compléter cette représentation pour mettre en oeuvre l'invention.

Dans les modes de réalisation représentés dans les Figures 1 et 2, le procédé de l'invention comprend les zones distinctes suivantes :
- une zone primaire Z1 de pyrolyse et de gazéification de la charge hydrocarbonée,
- une zone secondaire Z2 de gazéification opérant dans des conditions plus sévères que dans Z1,
- une zone Z3 de purification et de traitement du gaz de synthèse,
- une zone Z4 de production de carburants liquides à partir du gaz de synthèse et de transformation de ces carburants liquides afin de les ajuster aux spécifications finales des produits recherchés,
- une zone Z5 de séparation des effluents liquides en naphta, kérosène et gasoil,
- une zone Z6 de séparation du flux de naphta de manière à purger tout ou partie du naphta avant recyclage
- une zone Z7 de séparation du gaz de tête produit dans la section Z4 de manière à purger tout ou partie du gaz produit avant recyclage

Dans les modes de réalisation représentés, l'étape a) du procédé de l'invention est donc réalisée dans deux zones distincts Z1 et Z2.

Dans la zone Z1 est effectuée une pyrolyse et une gazéification de la charge hydrocarbonée alimentée par une conduite 1. La charge comporte des particules dont le diamètre moyen peut être compris entre 0,1 et 100 mm, préférentiellement entre 1 et 10 mm. La pyrolyse et la gazéification sont effectuées en présence d'un agent oxydant, alimenté par une conduite 2, telle que la vapeur d'eau, seule ou en mélange avec un autre gaz tel que du dioxyde de carbone, du monoxyde de carbone, de l'hydrogène ou du méthane. Sans sortir du cadre de l'invention, le gaz vecteur réactif peut être du dioxyde de carbone, seul ou en mélange avec un autre gaz tel que de la vapeur d'eau, du monoxyde de carbone, de l'hydrogène ou du méthane. En général, et de manière à obtenir au final un gaz de synthèse à fort pouvoir calorifique, la teneur en gaz oxydant, par exemple l'oxygène ou l'air, est, dans la mesure du possible, minimisée. La teneur en gaz oxydant est avantageusement inférieure à 10 % molaire, voire inférieure à 5% molaire.

La section Z1 correspond à un procédé en lit fluidisé comportant un ou plusieurs étages de pyrolyse et de gazéification tels que décrit par le brevet d'invention US 5,494,653. Deux types d'effluents sont produits : des effluents gazeux représentés par le flux 3a et des résidus solides non convertis représentés par le flux 3b. Les conditions opératoires sont définies par des températures de l'ordre de 700 à 950°C et des pressions de l'ordre de 0,05 à 0,5 MPa relatifs. L'apport d'énergie à la zone Z1 est fourni par la circulation d'un solide caloporteur entre les zones de gazéification et une zone périphérique, non représentées sur les figures, dans laquelle on effectue la combustion du carbone de la charge non convertie correspondant au flux 3b, et éventuellement un combustible d'appoint.

La conversion, dans la zone Z1, de la charge hydrocarbonée en gaz de synthèse comportant du monoxyde de carbone et de l'hydrogène n'est pas totale. Des goudrons correspondant à des composés aromatiques plus ou moins alkylés ainsi que des hydrocarbures légers de type méthane et éthylène sont formés dans des proportions importantes. Le gaz de synthèse 3a produit dans la zone Z1 est donc soumis dans la zone Z2 à un traitement de finition plus sévère de manière à maximiser la conversion des goudrons et des hydrocarbures légers en gaz de synthèse par des réactions de reformage à la vapeur. Un agent oxydant 4 telle que de la vapeur d'eau, seule ou en mélange avec un autre gaz tel que du dioxyde de carbone, du monoxyde de carbone, de l'hydrogène ou du méthane peut être ajouté comme réactif à la zone Z2. Une charge hydrocarbonée gazeuse 5 ayant un rapport molaire d'hydrogène sur carbone élevé peut également être ajoutée de manière à améliorer le rapport H₂/CO en sortie de la zone Z2. Les conditions opératoires dans la zone Z2 sont très sévères avec des températures typiquement de l'ordre de 1000 à 1500°C.

L'apport d'énergie à la zone peut être fourni de multiples façons. On peut mentionner, de manière non exhaustive, l'utilisation de torches électriques à plasma, de brûleurs à oxygène ou à hydrocarbures.

Le gaz de synthèse 6 produit en sortie de la zone de finition Z2 subit une série de traitements successifs. L'ensemble de ces étapes de transformation ne sont pas décrites de manière exhaustive dans le brevet. On peut mentionner, à titre non exhaustif et non forcément obligatoire, la réduction de la teneur en eau et en poussières, la conversion du gaz de synthèse afin d'ajuster le rapport molaire H₂/CO nécessaire à la synthèse de carburants liquides, l'extraction éventuelle du dioxyde de carbone.

L'ensemble de ces traitements permet de produire un gaz de synthèse 7 dans les spécifications d'entrée requises de la zone de production de carburants liquides Z4. Cette zone comprend à la fois les unités de conversion du gaz de synthèse en carburants liquides de type Fischer-Tropsch avec un catalyseur disposé en lit fixe ou en suspension dans une phase liquide (slurry selon la terminologie anglosaxonne), des unités de filtration des cires produites dans le procédé, de fractionnement primaire et des unités d'hydrocraquage des composés lourds de type C₁₉⁺.

Les effluents liquides 8a sont ensuite séparés dans la zone Z5 qui correspond à un enchaînement de tours de séparation comprenant au moins un débutaniseur et une colonne de séparation du naphta. Les effluents liquides produits correspondent à une coupe naphta 11 formée principalement de composés de type C₅-C₉ (c'est-à-dire une coupe formée essentiellement d'hydrocarbures C₅, C₆, C₇, C₈, C₉ comprenant 5, 6, 7, 8 ou 9 atomes de carbones), une coupe kérosène 10 de type C₁₀-C₁₄ et une coupe gasoil 9 de type C₁₅-C₁₉. Le flux 12 correspond à la fraction gazeuse C₃-C₄ produite en tête du débutaniseur.

Les effluents aqueux produits par la réaction Fischer-Tropsch sont évacués par la conduite 8b vers un dispositif de traitement de l'eau non représenté.

La coupe naphta 11 peut être recyclée toute ou partie dans la zone de gazéification Z2. La zone Z6 correspond à une zone de séparation de type manifold entre un courant de purge 13 et un courant de recyclage 14.

Le gaz de tête 15 du Fischer-Tropsch ainsi que les effluents de tête 12 du débutaniseur de la zone Z5 peuvent également être recyclés tout ou partie dans la zone de gazéification Z2. La zone Z7 correspond à une zone de séparation de type manifold entre un courant de purge 16 et un courant de recyclage 17. Le flux 17 recyclé est envoyé dans la zone de gazéification secondaire Z2. Dans la mesure où les conditions opératoires sont suffisamment sévères dans la zone Z1, on peut également envisager de renvoyer ce flux 17 dans la zone Z1.

Dans le mode de réalisation de la Figure 1, le flux 14 recyclé est envoyé dans la zone de gazéification secondaire Z2.

Dans le mode de réalisation représenté à la Figure 2, le flux 14 recyclé est envoyé dans la zone de gazéification primaire Z1.

### Exemple 1 :

Cet exemple est basé sur la modélisation informatique d'un enchaînement de procédés de conversion de la biomasse en gaz de synthèse puis de conversion dudit gaz de synthèse en carburants liquides conformément à la Figure 1, à l'exception du recyclage du gaz de tête et du recyclage du naphta produit dans la zone de séparation, qui ne sont pas réalisés. En d'autres termes les débits des courant 14 et 17 sont nuls. La modélisation a été réalisée par le logiciel Pro II ® commercialisé par la société SIMSCI.

Les calculs sont effectués pour une installation ayant une capacité de 50 tonnes par heure de biomasse sur base sèche, opérant à 0,4 MPa (mégapascals). La biomasse correspond à de la sciure de bois dont les particules solides présente un diamètre compris entre 1 et 4 mm et un rapport de la longueur sur le diamètre, L/D, compris entre 1 et 3. La biomasse est introduite en présence d'un gaz de convoyage qui correspond à de la fumée de combustion composée d'azote et de dioxyde de carbone.

La biomasse est introduite dans la zone de gazéification Z1 avec une humidité relative de 10 % en poids en présence de vapeur d'eau surchauffée à 500°C, la proportion initiale d'eau introduite étant de 0,47 kg d'eau par kg de biomasse sèche. La température de sortie des effluents en sortie de la zone primaire de gazéification Z1 est de 800°C.

Le post-traitement de finition du gaz de synthèse dans la zone Z2 permet de convertir les goudrons et le méthane résiduel présent dans le gaz de synthèse. Il est effectué à une température de 1300°C.

La zone Z3 comprend une zone de compression, une zone d'ajustement afin d'ajuster le rapport molaire H₂/CO à 2,15 et une zone d'extraction du CO₂ par un lavage aux amines.

La zone Z4 comprend un réacteur Fischer-Tropsch opérant en présence d'un catalyseur en suspension dans une phase liquide, un fractionnement primaire permettant d'obtenir un gaz de tête et des effluents liquides envoyés dans un réacteur d'hydrocraquage.

La zone Z5 comprend un débutaniseur et une colonne de soutirage du naphta.

La production cumulée de gasoil et de kérosène est de 6906 kg/hr, soit un rendement de 13,8 % en poids de biomasse sur base sèche.

Le tableau n°1 ci-dessous récapitule les différents flux de l'enchaînement de procédés.

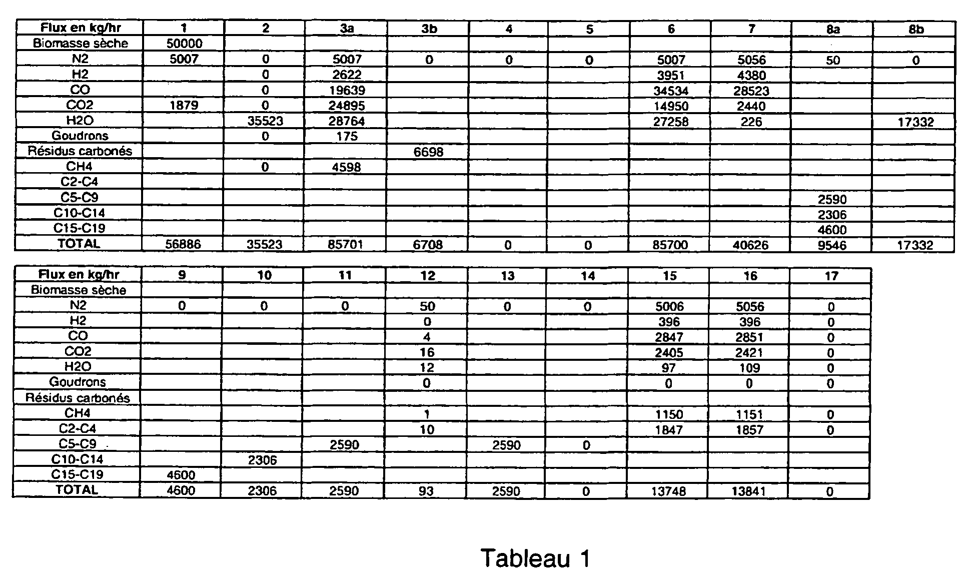

Le rapport molaire H₂/CO est de 1,87 en sortie de la zone Z1. La conversion du méthane et des goudrons dans la zone Z2 fait chuter le rapport à la valeur de 1,60, ce qui nécessite un ajustement important sur le gaz de synthèse produit pour ramener le rapport molaire H₂/CO à 2,15 en entrée du Fischer-Tropsch.

### Exemple 2 :

Une simulation informatique est réalisée sur la base de l'exemple 1, à l'exception du gaz de tête produit dans la section Fischer-Tropsch Z4, qui est recyclé en entrée de la zone Z2 de gazéification secondaire avec un niveau de purge de 15% de manière à éviter des accumulations excessives d'azote dans la boucle de gaz de synthèse. La production cumulée de gasoil et de kérosène est de 9550 kg/hr, soit un rendement de 19,1 % en poids de biomasse sur base sèche.

Le tableau n°2 ci-dessous récapitule les différents flux de l'enchaînement de procédés.

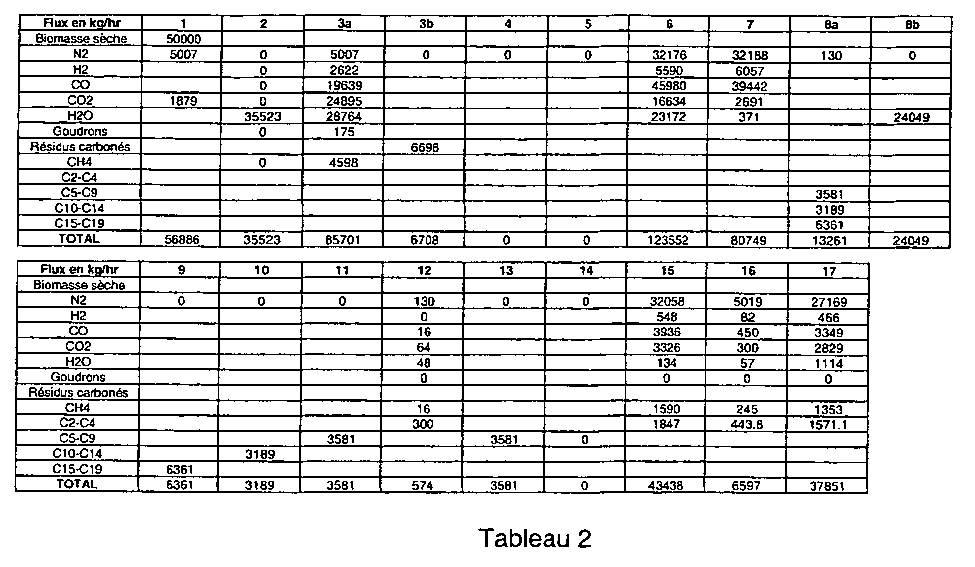

Le rapport molaire H₂/CO est également de 1,87 en sortie de la zone Z1. Le recyclage du gaz de tête dans la zone Z2 permet de limiter la diminution du rapport H₂/CO. Ce rapport présente la valeur de 1,70, ce qui minimise le recours à l'ajustement sur le gaz de synthèse pour ramener le rapport molaire H₂/CO à 2,15 en entrée de la zone de synthèse Fischer-Tropsch.

### Exemple 3 (selon l'invention) :

Une simulation informatique est réalisée sur la base de l'exemple 1, à l'exception du gaz de tête produit dans la section Fischer-Tropsch Z4, qui est recyclé en entrée de la zone Z2 de gazéification secondaire. Il en est de même pour le naphta produit dans la zone de séparation finale Z5 des carburants liquides. Les niveaux de purge sont respectivement de 15% sur le gaz de tête et de 1% sur le naphta de manière à éviter des accumulations excessives de produits indésirables dans la boucle de gaz de synthèse. La production cumulée de gasoil et de kérosène est de 12504 kg/hr, soit un rendement de 25,0 % en poids biomasse sur base sèche.

Le tableau n°3 ci-dessous récapitule les différents flux de l'enchaînement de procédés.

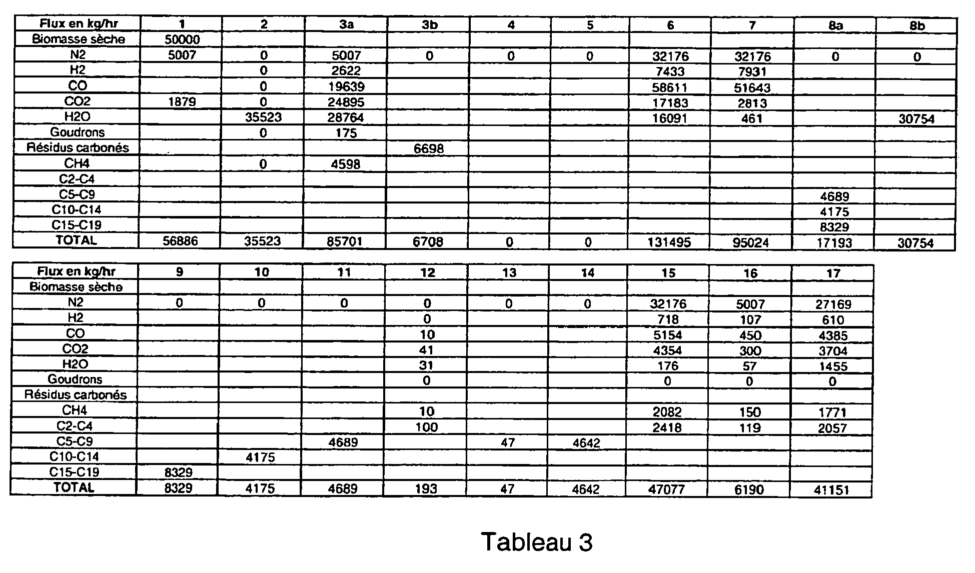

Le rapport molaire H₂/CO est toujours de 1,87 en sortie de la zone Z1. Le recyclage du gaz de tête cumulé à celui du naphta dans la zone Z2 permet de limiter la diminution du rapport H₂/CO, qui présente la valeur de 1,78, ce qui limite d'autant le recours à l'ajustement sur le gaz de synthèse pour ramener le rapport molaire H₂/CO à 2,15.

Il s'agit donc de la configuration optimale pour maximiser le débit massique de monoxyde de carbone en entrée de la zone de synthèse Fischer-Tropsch.

L'exemple met en évidence le gain substantiel occasionné par le recyclage du naphta et du gaz de synthèse dans la boucle de gaz de synthèse.

## Revendications

1. Procédé pour la production de carburants liquides lourds de type gasoil et kérosène à partir d'une charge solide contenant de la matière organique dans lequel:
a) on soumet la charge solide à une étape de gazéification de manière à convertir ladite charge en gaz de synthèse comportant du monoxyde de carbone et de l'hydrogène,
b) on soumet le gaz de synthèse obtenu à l'étape a) à un traitement de purification comportant un ajustement pour augmenter le rapport molaire de l'hydrogène sur le monoxyde de carbone, H₂/CO, jusqu'à une valeur comprise entre1,8 et 2,2
c) on soumet le gaz de synthèse purifié obtenu à l'étape b) à une étape de conversion comportant la mise en oeuvre d'une synthèse de type Fischer-Tropsch de manière à convertir ledit gaz de synthèse en un effluent liquide et un effluent gazeux au moins en partie recyclé à l'étape a) de gazéification,
d) on fractionne l'effluent liquide obtenu à l'étape c) de manière à obtenir les quatre coupes suivantes; une coupe gazeuse au moins en partie recyclée à l'étape a) de gazéification, une coupe naphta, une coupe kérosène et une coupe gasoil, et
e) on recycle au moins une portion de la coupe naphta à l'étape a) de gazéification.

2. Procédé selon l'une des revendications 1, dans lequel l'étape a) de gazéification est mise en oeuvre dans au moins une zone dans laquelle la température est maintenue au-dessus de 1000°C.

3. Procédé selon l'une des revendications 1 à 2, dans lequel lors de l'étape a) de gazéification,
- on met en contact la charge avec un agent oxydant dans des conditions de pyrolyse pour produire un premier effluent gazeux dans une zone primaire dans laquelle la charge solide est maintenue à l'état fluidisé et la teneur en gaz oxydant est maintenue au-dessous de 10 % molaire, et
- on soumet l'effluent gazeux ainsi produit à un traitement de finition dans une zone secondaire dans laquelle la température est maintenue entre 1000 et 1500°C.

4. Procédé selon la revendication 3, dans lequel l'apport d'énergie dans la zone primaire est réalisé par la circulation d'un solide caloporteur.

5. Procédé selon la revendication 4, dans lequel le solide caloporteur comprend une silice alumine présentant un caractère acide.

6. Procédé selon l'une des revendications 1 à 5, dans lequel la charge solide est injectée au moyen d'un fluide qui ne contient pas d'azote, par exemple du dioxyde de carbone ou de la vapeur d'eau surchauffée.

7. Procédé selon l'une des revendications 1 à 6, dans lequel le traitement de purification de l'étape b) comprend, en outre, au moins l'un des traitements choisis parmi les traitements suivants; une réduction de la teneur en eau, un réduction de la teneur en poussière, une extraction du dioxyde de carbone et une compression du gaz de synthèse.

8. Procédé selon l'une des revendications 1 à 7, dans lequel l'étape c) comportant la mise en oeuvre d'une synthèse de type Fischer-Tropsch comporte en outre une étape de filtration des cires produites par ladite synthèse de type Fischer-Tropsch, une étape de fractionnement de manière à récupérer une coupe de composés hydrocarbonés ayant au moins dix neuf atomes de carbones et une étape d'hydrocraquage desdits composés.

9. Procédé selon l'une des revendications 1 à 8, dans lequel on purge une portion de l'effluent gazeux obtenu à l'étape c) et de la fraction gazeuse obtenue à l'étape d)

10. Procédé selon l'une des revendications 4 à 9, dans lequel on recycle au moins une portion de la coupe naphta dans la zone primaire de l'étape a).

11. Procédé selon l'une des revendications 4 à 10, dans lequel on recycle au moins une portion de la coupe naphta dans la zone secondaire de l'étape a).

## Claims

1. Process for the production of liquid fuels starting from a solid feedstock that contains the organic material in which:
a) the solid feedstock is subjected to a gasification stage so as to convert said feedstock into synthesis gas comprising carbon monoxide and hydrogen,
b) the synthesis gas that is obtained in stage a) is subjected to a purification treatment that comprises an adjustment to increase the molar ratio of hydrogen to carbon monoxide, 112/CO, up to a value ranging from 1.8 to 2.2,
c) the purified synthesis gas that is obtained in stage b) is subjected to a conversion stage that comprises the implementation of a Fischer Tropsch type synthesis so as to convert said synthesis gas into a liquid effluent and a gaseous effluent which is partially recycled to the gasification stage a),
d) the liquid effluent that is obtained, in stage c) is fractionated so as to obtain at least four fractions a gaseous fraction at least partially recycled to the gasification step a), a naphta fraction, a kerosene fraction, and a gas oil fraction, and
e) at least a portion of the naphta fraction is recycled in gasification stage a)

2. Process according to claim 1, in which the gasification stage a) is implemented in at least one zone in which the temperature is kept above 1000°C.

3. Process according to anyone of claims 1 to 2, in which during the gasification stage
- the feedstock is brought into contact with an oxidizing agent under pyrolysis conditions to produce a first gaseous effluent in a primary zone in which the solid feedstock is kept in a fluidized state and the oxidizing agent is kept below 10% mol, and
- the gaseous effluents that is thus produced is subjected to a finishing treatment in a secondary zone in which the temperature is kept between 1000 and 1500°C.

4. Process according to claim 3 in which the input of energy into the primary zone is carried out by the circulation of a solid heat exchange.

5. Process according to claim 4 in which the solid heat exchanger comprises a silica alumina that exhibits an acidic nature.

6. Process according, to anyone of claims 1 to 5, in which the solid feedstock is injected by means of a fluid that does not contain nitrogen, for example carbon dioxide or superheated water vapor.

7. Process according to anyone of claims 1 to 6, in which the purification treatment of stage b) also comprises at least one of the treatments selected from among a reduction of the water content, a reduction of the dust content, an extraction of carbon dioxide and a compression of synthesis gas.

8. Process according to anyone of claims 1 to 7, in which stage c) that comprises the implementation of a Fischer Tropsch type synthesis also comprises a stage for filtration of waxes produced by said Fisher Tropsch synthesis, a fractionation stage so as to recover a fraction of hydrocarbon compounds having at least 19 carbon atoms and a hydrocracking stage of said compounds.

9. Process according to anyone of claims 1 to 8, in which a portion of the gaseous effluent that is obtained at stage c) and the gaseous fraction that is obtained at stage d) are purged.

10. Process according to anyone of claims 4 to 9, in which at least a portion of the naphta fraction is recycled into the primary zone of stage a).

11. Process according to anyone of claims 4 to 9, in which at least a portion of the naphta fraction is recycled into the secondary zone offstage a).

## Patentansprüche

1. Verfahren zur Produktion von flüssigen Treibstoffen vom Typ Gasöl und Kerosin aus einer Feststoffbeschickung, die organisches Material enthält, wobei:
a) die Feststoffbeschickung einem Vergasdngsschritt unterzogen wird, um die Beschickung in Synthesegas umzuwandeln, das Kohlenmonoxid und Wasserstoff umfasst,
b) das Synthesegas, das in Schritt a) erhalten wurde, einer Reinigungsbehandlung unterzogen wird, die eine Anpassung umfasst, um das Molverhältnis von Wasserstoff zu Kohlenmonoxid, H₂/CO, bis auf einen Wert im Bereich zwischen 1,8 und 2,2 zu erhöhen,
c) das gereinigte Synthesegas, das in Schritt b) erhalten wurde, einem Umwandlungsschritt unterzogen wird, der den Einsatz einer Fischer-Tropsch Synthese umfasst, um das Synthesegas in einen flüssigen Abfluss und einen gasförmigen Abfluss umzuwandeln, der mindestens teilweise zum Vergasungsschritt a) recycelt wird,
d) der flüssige Abfluss, der in Schritt c) erhalten wurde, fraktioniert wird, um die folgenden vier Schnitte zu erhalten: einen gasförmigen Schnitt, der mindestens teilweise zum Vergasungsschritt a) recycelt wird, einen Naphtaschnitt, einen Kerosinschnitt und einen Gasölschnitt, und
e) mindestens ein Anteil des Naphtaschnitts zum Vergasungsschritt a) recycelt wird.

2. Verfahren nach Anspruch 1, wobei der Vergasungsschritt a) in mindestens einer Zone eingesetzt wird, in der die Temperatur oberhalb von 1.000 °C gehalten wird.

3. Verfahren nach einem der Ansprüche 1 bis 2, wobei während des Vergasungsschritts a)
- die Beschickung unter Pyrolysebedingungen mit einem Oxidationsmittel in Kontakt gebracht wird, um einen ersten gasförmigen Abfluss in einer primären Zone zu produzieren, in der die Feststoffbeschickung in fluidisierte Zustand gehalten wird, und der Gehalt an Oxidationsgas unter 10 Mol.-% gehalten wird, und
- der so produzierte gasförmige Abfluss einer Nachbehandlung in einer sekundären Zone unterzogen wird, in der die Temperatur zwischen 1.000 und 1.500 °C gehalten wird.

4. Verfahren nach Anspruch 3, wobei die Energiezufuhr in die primäre Zone durch das Zirkulieren eines festen Wärmeträgers realisiert wird.

5. Verfahren nach Anspruch 4, wobei der feste Wärmeträger ein Siliciumdioxid-Aluminiumoxid umfasst, das einen Säurecharakter aufweist.

6. Verfahren nach einem der Ansprüche 1 bis 5, wobei die Feststoffbeschickung mittels eines Fluids injiziert wird, das keinen Stickstoff enthält, zum Beispiel Kohlendioxid oder überhitzter Wasserdampf.

7. Verfahren nach einem der Ansprüche 1 bis 6, wobei die Reinigungsbehandlung aus Schritt b) ferner mindestens eine der Behandlungen, ausgewählt aus den folgenden Behandlungen umfasst: eine Reduktion des Wassergehalts, eine Reduktion des Staubgehalts, eine Extraktion des Kohlendioxids und eine Kompression des Synthesegases.

8. Verfahren nach einem der Ansprüche 1 bis 7, wobei Schritt c), der den Einsatz einer Fischer-Tropsch Synthese umfasst, ferner einen Filtrationsschritt der Wachse umfasst, die durch die Fischer-Tropsch Synthese produziert wurden, einen Fraktionierungsschritt, um einen Schnitt aus Kohlenwasserstoffverbindungen zu gewinnen, die mindestens neunzehn Kohlenstoffatome haben, und einen Schritt des Hydrocrackens dieser Verbindungen.

9. Verfahren nach einem der Ansprüche 1 bis 8, wobei ein Anteil des gasförmigen Abflusses, der in Schritt c) erhalten wurde, und der gasförmigen Friktion, die in Schritt d) erhalten wurde, gespült wird.

10. Verfahren nach einem der Ansprüche 4 bis 9, wobei mindestens ein Anteil des Naphtaschnitt zur primären Zone aus Schritt a) recycelt wird.

11. Verfahren nach einem der Ansprüche 4 bis 10, wobei mindestens ein Anteil des Naphtaschnitt zur sekundären Zone aus Schritt a) recycelt wird.
